# EUROPEAN PATENT SPECIFICATION

(11) **EP 1 856 002 B1**
(45) Date of publication and mention of the grant of the patent: **11.05.2011**
(21) Application number: 06710475.2
(22) Date of filing: 15.02.2006
(51) Int. Cl.: C03B 37/04

(54) **METHOD AND DEVICE FOR MAKING GLASS FIBERS**
VERFAHREN UND VORRICHTUNG ZUR HERSTELLUNG VON GLASFASERN
PROCEDE ET DISPOSITIF POUR LA FABRICATION DE FIBRES DE VERRE

(30) Priority: 11.03.2005 IT MI20050388
(43) Date of publication of application: 21.11.2007
(73) Proprietor: TECHINT COMPAGNIA TECNICA INTERNAZIONALE S.p.A., 20149 Milano (IT)
(72) Inventor: FASCE, Gerolamo, I-16038 Santa Margherita Ligure (IT); LA GRECA, Marco, I-20068 Peschiera Borromeo (IT); MASSINI, Roberto, I-24043 Caravaggio (IT)
(74) Representative: Tansini, Elio Fabrizio
(86) International application number: PCT/IB2006/000429
(87) International publication number: WO 2006/095231

(56) References cited:
- BE-A- 629 205
- DE-A1- 2 920 556
- US-A- 4 300 932
- US-A- 5 688 302

## Description

The present inventions relates to a fibering device and a method for making insulating glass fibers.

It is known that there are on the market and are presently used machines for producing an insulating glass fiber in which the rotor made of a special metal alloy, eccentrically and continuously fed with melted glass and being driven in rotation around an axis thereof, ejects primary glass threads, by centrifugal force, from a predetermined number of holes present in a side surface of the rotor itself, which threads are reduced into very thin fibers by suitable means with which the machine is equipped.

In more detail, an annular burner is generally present which is concentric with respect to the rotor and which, at the primary thread-exit region, is capable of creating the necessary temperature and pressure parameters designed to maintain the glass threads to the right viscosity adapted to enable subsequent stretching.

Actually, the stretching operation mostly relies on a blowing ring or crown fed with compressed air that is peripherally and concentrically active exactly at the exit region of the primary threads from the rotor. In this way, the compressed air flow acts on the fibers causing elongation of same and consequent thinning of the fiber section so as to obtain an insulating glass fiber having the required physical and mechanical features.

Also known are machines provided with an auxiliary blowing unit disposed alongside the blowing crown and set to generate a further air flow under pressure. In particular, the auxiliary blowing unit is made up of a nozzle having an annular opening facing the outer surface of the rotor and concentric with the rotation axis of the rotor itself.

The auxiliary blowing unit generates a pressurised flow directed downwardly and inclined to the rotation axis of the rotor. In this way, the combined flows of compressed air from the blowing crown and pressurised air generated by the nozzle produce an air flow of high pressure which is adapted to quickly stretch and separate the fibers coming out of the rotor.

It is also known from document US5688302 a device and a method for making glass fibers with a rotor for receiving molten glass.

The rotor has holes for centrifuging the glass on the periferal wall and an annular burner for heating the primary filaments is provided.

The primary blowing crown generates air for attenuating the filaments and a second blowing crown further attuates the filament themselves.

All the blowing crown attenuating the fibres are fixed with respect to the rotor.

However, the solution briefly described above has some operating limits.

It is to be pointed out first of all that the above machines do not appear to be particularly versatile.

It is known that in the fibering process the same rotor is used for many days, which involves an important modification in the shape of the produced-fiber torus due to wear of the holes from which the glass comes out.

The above drawback results in difficulties in evenly distributing the fiber in the collecting chamber and decay in the quality of the finished product.

Also the unavoidable physico-chemical variations in the melted glass give rise to the same negative effects.

Under this situation, it will be recognised that known machines cannot be easily adapted to the operating parameters based on the type of glass to be fibered.

In addition, it is to be pointed out that under this situation known machines do not allow glass fibers to be produced which have an a priori-determined constant average length. In fact it was possible to notice that the angle and point of incidence of the air flows on the fibers, for the purpose of causing stretching, are subjected to variations due to modification of the spatial configuration of the outgoing material, and therefore they might not be optimal.

The present invention aims at substantially solving the above mentioned drawbacks.

It is a first aim of the invention to make available a fibering device capable of adapting itself to the type of material used and to the operating conditions of the machine.

It is a further aim of the invention to provide a fibering device capable of producing glass fibers of predetermined and variable lengths and diameters, depending on the production requirements.

The foregoing aims that will become more apparent in the course of the following description are substantially achieved by a fibering device in accordance with the invention.

Further features and advantages will be best understood from the detailed description of a fibering device in accordance with the appended claims.

A preferred but not exclusive embodiment of a fibering device, for making glass fiber will be set out hereinafter with reference to the accompanying drawings, in which:
- Fig. 1 is an elevation side view partly in section of the fibering device in accordance with the invention; and
- Fig. 2 is a diagrammatic plan view from the top of a construction detail of the device shown in Fig. 1.

With reference to the drawings, a fibering device, for making insulating glass fibers for production of manufactured articles intended for thermal and acoustic insulation has been generally identified with reference numeral 1.

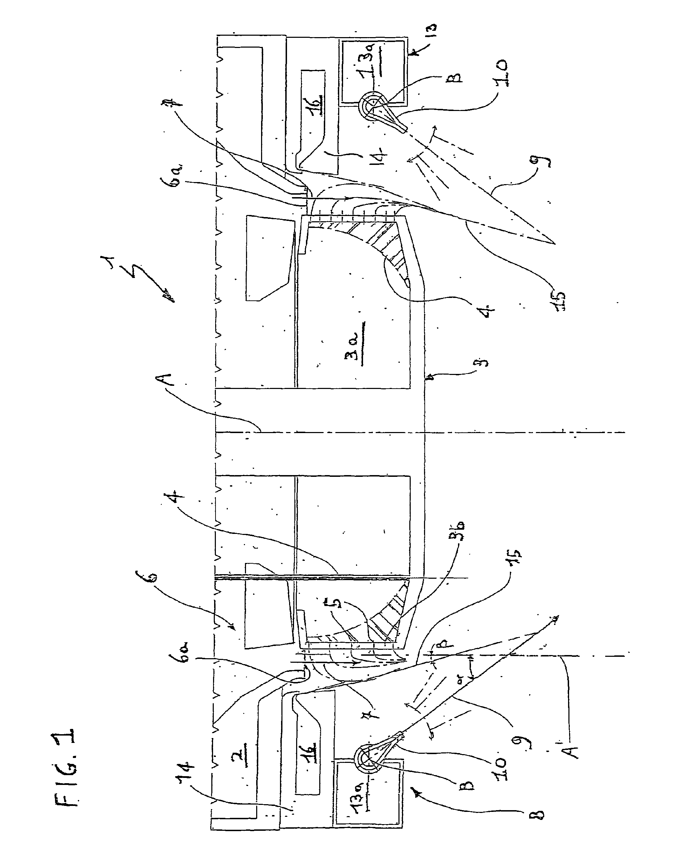

As can be viewed from Fig. 1, the fibering device comprises a bearing structure 2 with which a rotor 3 is engaged. This rotor 3 is in particular movable around a rotation axis A during operation of the device 1.

As can be seen still in Fig. 1, a material to be fibered 4 (generally a suitable glass composition to make glass fibers) is eccentrically fed into a cavity 3a defined in rotor 3.

Said rotor 3 on a peripheral side surface 3b thereof has a predetermined number of holes 5 suitably sized and spaced apart the same distance from each other to enable exit of the material 4 (by centrifugal effect) in the form of glass filaments, following rotation around said axis A.

Immediately adjacent to rotor 3 there is the presence of at least one annular burner 6 in engagement with the bearing structure 2, which is capable of directing a flow 7 of high-temperature burnt gases to the primary filaments coming out of rotor 3 so as to maintain the suitable viscosity conditions of the primary threads to enable the latter to be submitted to a stretching action.

In particular, burner 6 consists of an annular chamber disposed above rotor 3 and coaxial with the rotation axis A of the rotor 3 itself.

The annular chamber has an outlet 6a to direct the burnt gas flow 7 along a direction parallel to the rotation axis A of the rotor. In other words, the flow 7 made up of high-temperature burnt gases, is directed towards the primary filaments coming out of the rotor.

In this way (taking the temperature of flow 7 into account) the possibility of making the glass threads increasingly thinner is successfully ensured i.e. it is possible to lengthen the path along which the glass stays to a viscosity enabling it to be stretched.

Generally, the burner 6 too will have a stretching effect on the fiber, but the final thinning operation relies on the action of the compressed air.

The device 1 further has one blower unit 14 (of known type and described in the following) and a second blower unit 8 coaxial with burner 6, to generate the second compressed-air flow 9 active on the fiber material coming out of rotor 3.

Advantageously, the second blower unit 8 defined by a compressed-air blowing crown can be configured according to different operating positions to be selected by the operator depending on the production requirements.

Generally these operating positions are reached as a result of suitable rotations of the blower unit around an axis thereof (transverse to the rotation axis A of rotor 3) to vary the direction of the second flow 9.

In particular, the second blower unit 8 has at least one flow delivering nozzle 10 movable around a respective axis B lying in a plane perpendicular to the rotation axis A of the rotor.

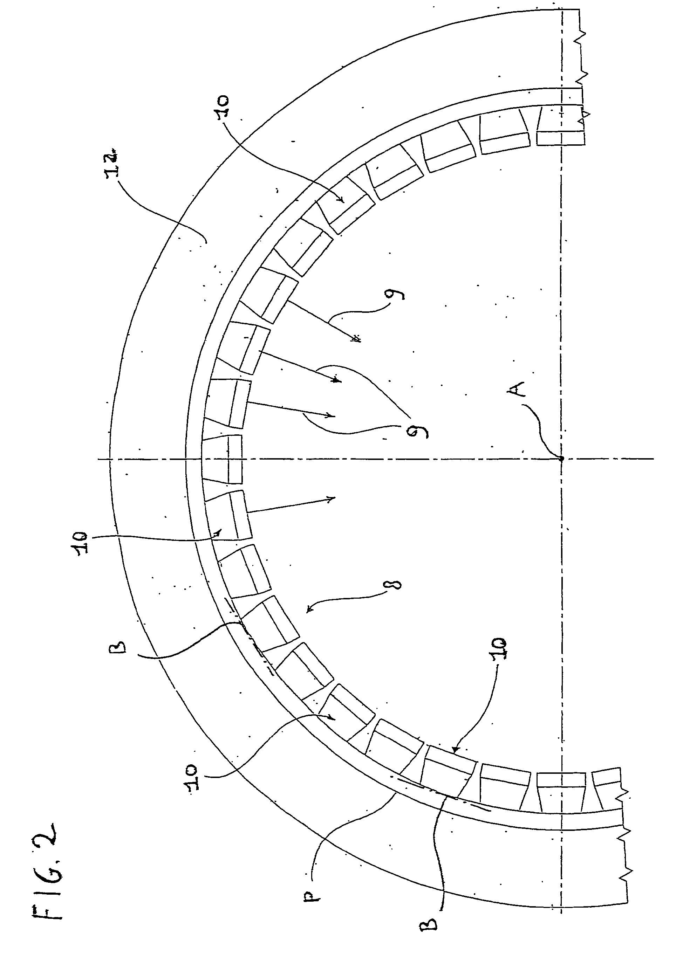

More particularly, as shown in detail in Fig. 2, the second blower unit 8 has a plurality of nozzles 10 disposed in mutual side by side relationship along a circular path P concentric with the rotation axis A of rotor 3.

In this way, the second flow 9 generated by the second blower unit 8 is made up of the flows generated by each individual nozzle and has a substantially conical overall conformation converging downwardly.

Still referring to Fig. 2, it is possible to see that the rotation axis B of each individual nozzle 10 is tangential to said circular path P. Advantageously, following rotation of each nozzle 10, the orientation of the second flow 9 too is modified, as well as the angle by which this flow impinges on the fibers coming out of rotor 3.

Preferably, the Applicant has found an optimal operation where nozzles 10 provided with an outlet of a 30x0.15 mm size are used. It is further to be pointed out that nozzles 10 are suitably spaced apart from each other (see Fig. 2) to avoid them to impact against each other during their movements.

The device 1 further has actuating means to move the nozzles in a co-ordinated manner and in synchronism with each other. Advantageously, the co-ordinated movement of nozzles 10 causes a variation in the conical profile of the second flow 9.

It is to be pointed out that the actuating means, not shown in the accompanying drawings as they are of known type, can consist of any actuating member of the type widely used and designed for rotation of said nozzles. For example, said means can consist of a pneumatic system or of respective mechanical actuators and one or more motors governed by an electronic control box.

In addition, the device 1 is provided with a supporting member 12 of annular extension to carry said nozzles 10 in a circumferential arrangement. The supporting member 12 has a respective actuating system (not shown and described because it is of known type too) to vertically move the member 12 itself along a direction parallel to the rotation axis A. In this way, the nozzles 10 too are further moved (in addition to being driven in rotation) close to and away from rotor 3 to further vary the direction of the second flow 9.

Again, the second blower unit 8 has a source of compressed air 13 associated with each nozzle 10 to generate the second pressurised air flow 9. The source of compressed air 13 is connected to an annular duct 13 supported by the supporting member 12 too, to supply all nozzles 10 with air under pressure. In this way the second flow 9 suitably oriented carries out an additional stretching operation before the first stretching flow 15 has completed its action.

As shown in Fig. 1, the first stretching flow is generated by the fixed blowing crown 14. The compressed air flow is directed downwardly and is inclined to the rotation axis A of rotor 3.

In detail, blower 14 has an annular chamber 16 with an outlet for directing the flow 15. The outlet is close to and concentric with burner 6. This enables the flow 15 to be active on the glass fibers immediately downstream of rotor 3.

Advantageously, the primary filaments coming out of rotor 3 are firstly impinged on by the first burnt gas flow 7 keeping them to the suitable temperature and by the compressed air flow 15 drawing the fibers downwardly; subsequently, the fibers are impinged on by the second flow 9 carrying out a further stretching action on the fibers themselves.

In this way, the lengthened fibers are separated and they are sucked onto a holed collecting belt and disposed under the rotor 3 to a minimum distance of 3 metres.

The second flow 9 of the present invention will act on the fibers being formed as an additional stretching element before the action of the first flow 15 has come to an end.

After the above description with reference to the structure of the fibering device, the production method carried out by the machine shown in Fig. 1 is the following.

First of all the rotor 3 driven in rotation is eccentrically fed with glass melted to a temperature determining the right glass viscosity.

By centrifugal force the material is urged out of the holes 5 present in the side surface 3b of the rotor itself, in the form of primary glass filaments.

The annular burner 6 generates a burnt gas flow 8 that is active on the filaments to maintain the possibility of making them increasingly thinner by heat supply. In other terms the flow 7 consisting of high-temperature gas maintains the primary filaments to the suitable viscosity for the stretching action.

The blowing crown 14 generates the compressed air flow 15 which, co-operating with the burnt gas 7 action, draws the primary filaments coming out of rotor 3 and directs them downwards and under the rotor 3 itself.

The second blower unit 8 generates the second flow 9 that is active in carrying out the stretching action as well. Under this situation it will be recognised that the flow 15 is disposed between the burnt gases 7 and the second flow 9.

Advantageously, as mentioned above, the direction of the second flow 9 can be modified depending on the various production requirements and the geometry of the outgoing fibers. In detail, the second flow 9 is oriented by driving said second blower unit 8 in rotation around its axis B transverse to the rotation axis A of rotor 3.

The step of driving the second blower unit 8 in rotation is carried out through rotation of each nozzle 10 around the respective axis B tangent to the circular path P. Preferably, nozzles 10 are rotated in a co-ordinated manner and in synchronism to change the conical profile of the second flow 9. In this way, the second flow 9 that is directed downwardly and towards axis A of rotor 3 is oriented in such a manner that it will be more or less incident on the fibers coming out of the rotor.

Advantageously, the second flow 9 is oriented in such a manner that the ratio of angle β defined between the first flow 15 and the vertical axis A' to angle α defined between the second flow 9 and the vertical axis A' can continuously vary. In particular when this ratio is less than 0.6, short fibers of greater diameter are obtained. This type of glass fiber is adapted to make insulating products of greater density for particular applications. On the contrary, ratios in the range of 0.6 to 1.0 increase the stretching action, and longer and thinner fibers are obtained.

In the light of the above it is therefore possible to state that this ratio enables the stretching action carried out by flow 15 and flow 9 to be optimised.

Again, as mentioned above, the second blower unit 8 can be fully moved along a direction parallel to the rotation axis A of rotor 3. In this way, the second flow 9 will strike on the fibers coming out of rotor 3 at different points to impart a more or less stretching effect to the fibers themselves.

Advantageously, the combined effect between the rotation of each nozzle 10 and the vertical movement of the nozzles 10 themselves enables the direction of the second flow 9 to be further modified so as to modify not only the angle of incidence, but also the point at which the fibers are impinged on by the second flow 9.

It will be appreciated that in this manner the second flow 9 can be moved until a maximum point of incidence which is coincident with the point of incidence of the first flow 15.

The invention achieves important advantages.

First of all, the previously described fibering device enables the stretching action on the fibers coming out of rotor 3 to be modified to obtain fibers having varying features in terms of length and diameter.

In other words, the position of nozzles 10, i.e. the distance of the nozzles from rotor 3 in a vertical direction and the angle of said nozzles (i.e. the angle of the outgoing flow) can be easily modified in order to vary the effect of the second flow 9 on the fiber formation and consequently to determine a more or less important action.

The orientation of the second flow 9 can be modified also depending on the glass material to be used and the geometry of the fiber on its coming out of the rotor. In fact, depending on the physical features of the material, the nozzles 10 are suitably positioned to obtain fibers of the required diameter and length.

Advantageously, with the device 1 of the invention it is also possible to obtain either short and thick fibers which are used for producing articles of manufacture of important density for example, or longer fibers suitable for insulating products that for transport and storage need to be greatly compressed but that must then be able, on installation, to recover their original thickness thereby ensuring the declared thermal resistance.

## Claims

1. A fibering device, for making glass fibers, comprising:
- at least one rotor (3) set to receive a material to be fibered (4) inside it and designed to be driven in rotation around its axis (A), said rotor (3) having a predetermined number of holes (5) in a surface thereof, which holes are designed to enable the material (4) to come out in the form of primary filaments;
- at least one annular burner (6) producing a high-temperature flow (7) of burnt gases towards the primary filaments coming out of the rotor (3) and maintaining said filaments in a viscous state adapted to enable them to be formed into increasingly thinner fibers;
- a fixed blowing crown (16), generating a compressed-air flow (15); and
- at least one second blowing crown (8), preferably of the compressed air type, placed under the annular burner (6), to generate a second flow (9) active as a stretching or drawing means for the glass filaments coming out of the rotor (3);
**characterised in that** said second blower unit (8) can be moved to different operating configurations to vary the direction of the second flow (9) and/or the point of incidence between the second flow (9) and the fibers coming out of the rotor (3).

2. A device as claimed in claim 1, **characterised in that** the second blower unit (8) comprises at least one flow-delivering nozzle (10) that is movable around a respective transverse axis (B), preferably perpendicular to the rotation axis (A) of the rotor (3).

3. A device as claimed in claim 2, **characterised in that** the second blower unit (8) comprises a plurality of nozzles (10) disposed in mutual side by side relationship along a circular path (P) concentric with the rotation axis (A) of said rotor (3); said rotation axis (B) of each nozzle (10) being tangential to said circular path (P).

4. A device as claimed in the preceding claim, **characterised in that** said second flow (9) is made up of the flows generated by each nozzle (10); said second flow (9) having a substantially conical overall conformation converging downwardly.

5. A device as claimed in the preceding claim, **characterised in that** it further comprises actuating means for said nozzles (10) to move the latter in a co-ordinated manner and in synchronism with each other, said movements of the nozzles (10) varying the angle of the flow generated by each nozzle (10) relative to the rotation axis (A).

6. A device as claimed in the preceding claim, **characterised in that** it further comprises a substantially annular supporting member (12) to support each of said nozzles (10), said supporting member (12) being movable along a direction parallel to the rotation axis (A) of said rotor (3) close to/away from the annular burner (6).

7. A device as claimed in anyone of the preceding claims, **characterised in that** it further comprises a compressed-air source (13) associated with said second blower unit (8) to generate the second air flow (9) under pressure.

8. A device as claimed in anyone of the preceding claims, **characterised in that** the annular burner (6) comprises a chamber of annular shape as well, disposed above said rotor (3) and having an outlet (6a) for the high-temperature flow (7) of burnt gasses substantially parallel to the rotation axis (A) of the rotor (3) and directed to the primary filaments coming out of the rotor (3).

9. A device as claimed in the preceding claim, **characterised in that** it comprises a blower (14) disposed between the burnt gas outlet (6a) and the blower (8) to generate a compressed air flow (15) directed downwardly and towards the rotation axis (A) of the rotor (3); said flow (15) being active on the primary filaments coming out of the rotor (3).

10. A device as claimed in claim 9, **characterised in that** said blower (14) comprises an annular chamber (16) having an outlet for the flow (15); said outlet being adjacent to and concentric with the burnt gas outlet (6a) of the burner (6).

11. A device as claimed in claim 9 and/or 10, **characterised in that** the ratio of the angle β defined between the first flow (15) and the rotation axis (A) to the angle α, defined between the second flow (9) and the rotation axis (A) is smaller than or equal to 0.6 to produce short and thick fibers.

12. A device as claimed in anyone of claims 9 to 11, **characterised in that** said second flow (9) can be moved until it strikes on the fiber coming out of the rotor at a point coincident with the point of incidence of the first flow (15).

13. A method of making glass fibers, comprising the following steps:
- feeding a rotor (3) driven in rotation with melted glass to a temperature corresponding to the right viscosity to enable said melted glass to be reduced into fibers (4);
- obtaining discharge of the glass in the form of primary filaments from a predetermined number of holes (5) present in the rotor (3) itself;
- generating a high-temperature flow (7) of burnt gases active on said filaments coming out of the rotor (3) to maintain them to such a viscous state that reduction into fibers is allowed;
- carrying out a first thinning operation through a blower unit (14) generating a first compressed air flow (15) acting on the primary filaments;
- generating a second flow (9) also active on the fiber material;
**characterised in that** it further comprises the step of modifying the direction of the second flow (9) and/or the point of incidence between the second flow (9) itself and the fibers coming out of the rotor (3).

14. A method as claimed in the preceding claim, **characterised in that** the step of modifying the direction of the second flow (9) is obtained by driving in rotation a second blower unit (8) around an axis (B) thereof transverse to a rotation axis (A) of the rotor (3).

15. A method as claimed in the preceding claim, **characterised in that** said step of driving the second blower unit (8) in rotation comprises the sub-step of rotating a plurality of flow-delivering nozzles (10); each nozzle (10) rotating about a respective axis (B) tangent to a circular path (P) coaxial with the rotation axis (A) of the rotor.

16. A method as claimed in the preceding claim, **characterised in that** said nozzles (10) are rotated in a co-ordinated manner and in synchronism to change the direction of the second flow (9) defined by the flows generated by each individual nozzle (10).

17. A method as claimed in anyone of claims 13 to 16, **characterised in that** the burnt gas flow (7) is a high-temperature gas flow directed downwards along a direction preferably parallel to the rotation axis (A) of the rotor (3), and **in that** the second flow (9) is a compressed air flow directed towards the rotation axis (A) of the rotor (3).

18. A method as claimed in anyone of claims 14 to 17, **characterised in that** it further comprises the step of moving said second blower unit (8) along a direction parallel to the rotation axis (A) of the rotor.

19. A method as claimed in anyone of the preceding claims, **characterised in that** it further comprises the step of generating a first flow (15) by means of a blower unit (14); said flow (15) being incident on the fibers coming out of the rotor (3) and being disposed between the burnt gas flow (7) and the second flow (9).

## Patentansprüche

1. Fasernvorrichtung zur Herstellung von Glasfasern, umfassend:
- mindestens ein Laufrad (3), das für die Aufnahme im eigenen Innern eines zu fasernden Materials (4) bereitgestellt und dazu bestimmt ist, um die eigene Achse (A) in Drehung gebracht zu werden, wobei das Laufrad (3) auf der eigenen Oberfläche (3b) eine vorgegebene Anzahl von Bohrungen (5) aufweist, die bereitgestellt sind, den Austritt des Materials (4) in Form von primären Filamenten zu ermöglichen;
- mindestens einen ringförmigen Brenner (6), der einen Strom (7) von heißen Verbrennungsgasen in Richtung der primären Filamente am Austritt aus dem Laufrad (3) erzeugt und sie in einem viskösem Zustand derart erhält, dass deren Bildung in immer mehr dünneren Fasern erlaubt wird;
- einen festen Blaskranz (16), der einen Pressluftstrom (15) erzeugt; und
- mindestens einen zweiten Blaskranz (8), bevorzugt mit Pressluft, der unterhalb des ringförmigen Brenners (6) angeordnet ist, um einen zweiten Strom (9) zu erzeugen, der als Streckmittel der Glasfilamente am Ausgang aus dem Laufrad (3) wirkt;
**dadurch gekennzeichnet, dass** der zweite Blaskranz (8) in verschiedenen Arbeitsausgestaltungen verstellbar ist, um die Richtung des zweiten Stroms (9) und/oder die Einfallstelle zwischen dem zweiten Strom (9) und den Fasern am Ausgang aus dem Laufrad (3) zu verändern.

2. Vorrichtung nach Anspruch 1, **dadurch gekennzeichnet, dass** der zweite Blaskranz (8) mindestens eine Stromabgabedüse (10) umfasst, die um die entsprechende Querachse (P) herum, bevorzugter Weise senkrecht zur Drehachse (A) des Laufrades (3) beweglich ist.

3. Vorrichtung nach Anspruch 2, **dadurch gekennzeichnet, dass** der zweite Blaskranz (8) eine Vielzahl von Düsen (10) umfasst, die aneinander liegen und längs eines Kreisverlaufs (P) angeordnet sind, der zur Drehachse (A) des Laufrades (3) konzentrisch ist; wobei die Drehachse (B) einer jeden Düse (10)zur Kreisstrecke (P) tangierend ist.

4. Vorrichtung nach dem vorstehenden Anspruch, **dadurch gekennzeichnet, dass** der zweite Strom (9) aus den durch jede Düse (10) erzeugten Strömen besteht; wobei der zweite Strom (9) insgesamt eine im Wesentlichen konische und nach unten zusammenlaufende Ausbildung aufweist.

5. Vorrichtung nach dem vorstehenden Anspruch, **dadurch gekennzeichnet, dass** sie überdies Verstellmittel der Düsen (10) umfasst, um die Düsen (10) selbst auf koordinierte Art und Weise und zueinander gleichlaufend zu verstellen, wobei die Verstellung der Düsen (10) die Winkelbildung des von jeder Düse (10) erzeugten Stroms gegenüber der Drehachse (A) ändert.

6. Vorrichtung nach dem vorstehenden Anspruch, **dadurch gekennzeichnet, dass** sie überdies ein im Wesentlichen ringförmiges Halteorgan (12) umfasst, um jede der Düsen (10) abzustützen, wobei das Halteorgan (12) längs einer zur Drehachse (A) parallelen Richtung des Laufrades (3) zu/von dem ringförmigen Brenner (6) weg beweglich ist.

7. Vorrichtung nach einem beliebigen der vorstehenden Ansprüche, **dadurch gekennzeichnet, dass** sie überdies eine Druckluftquelle (13) aufweist, die dem zweiten Blaskranz (8) zugeordnet ist, um den zweiten Druckluftstrom (9) zu erzeugen.

8. Vorrichtung nach einem beliebigen der vorstehenden Ansprüche, **dadurch gekennzeichnet, dass** der ringförmige Brenner (6) eine gleichfalls ringförmige Kammer umfasst, die oberhalb des Laufrades (3) angeordnet ist und eine Austrittsöffnung (6a) des Stroms (7) von heißen Verbrennungsgasen aufweist, der im Wesentlichen zur Drehachse (A) des Laufrades (3) parallel und in Richtung der primären Filamente am Ausgang aus dem Laufrad (3) gerichtet ist.

9. Vorrichtung nach dem vorstehenden Anspruch, **dadurch gekennzeichnet, dass** sie eine Blaseinrichtung (14) umfasst, die zwischen dem Austritt der Verbrennungsgase (6a) und der Blaseinrichtung (8) angeordnet ist, um einen Druckluftstrom (15) zu erzeugen, der nach unten und in Richtung der Drehachse (A) des Laufrades (3) gerichtet ist; wobei der Strom (15) auf die primären Filamente am Ausgang aus dem Laufrad (3) wirkt.

10. Vorrichtung nach Anspruch 9, **dadurch gekennzeichnet, dass** die Blaseinrichtung (14) eine ringförmige Kammer (16) umfasst, die eine Austrittsöffnung des Stroms (15) aufweist; wobei die Austrittsöffnung gegenüber dem Austritt der Verbrennungsgase (6a) des Brenners (6) anliegend und konzentrisch ist.

11. Vorrichtung nach Anspruch 9 und/oder 10,
**dadurch gekennzeichnet, dass** das Verhältnis zwischen dem zwischen dem ersten Strom (15) und der Drehachse (A) festgelegten Winkel β und dem zwischen dem zweiten Strom (9) und der Drehachse (A) festgelegten Winkel (α) kleiner oder gleich 0,6 ist, um kurzstapelige und dicke Fasern herzustellen.

12. Vorrichtung nach einem beliebigen der Ansprüche von 9 bis 11, **dadurch gekennzeichnet, dass** der zweite Strom (9) verstellt werden kann, bis er auf die Faser am Ausgang aus dem Laufrad in einer Stelle auftrifft, die mit der Auftrittsstelle des ersten Stroms (15) zusammenfällt.

13. Verfahren zur Herstellung von Glasfasern, umfassend die folgenden Schritte:
- Zuführen zu einem sich drehenden Laufrad (3), mit geschmolzenem Glas auf einer Temperatur, die der einwandfreien Viskosität entspricht, um dem geschmolzenen Glas zu erlauben, in Fasern (4) reduziert zu werden;
- Erhalten des Austritts des Glases in der Form von primären Filamenten aus einer vorgegebenen Anzahl von Bohrungen (5), die am Laufrad (3) selbst anwesend sind;
- Erzeugen eines Stroms (7) von heißen Verbrennungsgasen, der auf die Filamente am Ausgang aus dem Laufrad (3) wirkt, um sie in einem viskösen Zustand derart zu halten, dass deren Reduktion in Fasern ermöglicht wird;
- Vorsehen einer ersten Abschwächung über eine Blaseinheit (14), die einen ersten Druckluftstrom (15) erzeugt, der auf die primären Filamente wirkt;
- Erzeugen eines zweiten Stroms (9), der gleichfalls auf das Fasermaterial wirkt;
**dadurch gekennzeichnet, dass** es überdies den Schritt umfasst, die Richtung des zweiten Stroms (9) und/oder die Auftrittstelle zwischen dem zweiten Strom (9) selbst und den Fasern am Ausgang aus dem Laufrad (3) abzuändern.

14. Verfahren nach dem vorstehenden Anspruch, **dadurch gekennzeichnet, dass** der Schritt des Abänderns der Richtung des zweiten Stroms (9) erhalten wird, indem eine zweite Blaseinheit (8) um die eigene zu einer Drehachse (A) des Laufrades (3) quer liegenden Achse (B) in Drehbewegung versetzt wird.

15. Verfahren nach dem vorstehenden Anspruch, **dadurch gekennzeichnet, dass** der Schritt der Drehbewegung der zweiten Blaseinheit (8) den Unterschritt umfasst, eine Vielzahl von Stromabgabedüsen (10) zu drehen; wobei jede Düse (10) um eine entsprechende Achse (B) gedreht wird, die zu einer kreisförmigen, zur Drehachse (A) des Laufrades (3) koaxialen Strecke tangierend ist.

16. Verfahren nach dem vorstehenden Anspruch, **dadurch gekennzeichnet, dass** die Düsen (10) gleichlaufend und koordiniert gedreht werden, um die Richtung des zweiten Stroms (9) zu wechseln, die durch die von ihren einzelnen Düsen erzeugten Strömen festgelegt ist.

17. Verfahren nach einem beliebigen der Ansprüche von 13 bis 16, **dadurch gekennzeichnet, dass** der Strom von verbrannten Gasen (7) ein Gasstrom mit hoher Temperatur ist, der nach unten längs einer Richtung gerichtet ist, die bevorzugter Weise zur Drehachse (A) des Laufrades (3) parallel ist, und **dadurch**, dass der zweite Strom (9) ein Druckluftstrom ist, der in Richtung der Drehachse (A) des Laufrades (3) gerichtet ist.

18. Verfahren nach einem beliebigen der Ansprüche von 14 bis 17, **dadurch gekennzeichnet, dass** es überdies den Schritt umfasst, die zweite Blaseinheit (8) längs einer Richtung zu verstellen, die zur Drehachse (A) des Laufrades parallel ist.

19. Verfahren nach einem beliebigen der vorstehenden Ansprüche, **dadurch gekennzeichnet, dass** es überdies den Schritt umfasst, einen ersten Strom (15) mittels einer Blaseinheit (14) zu erzeugen; wobei der Strom (15) auf den Fasern am Ausgang aus dem Laufrad (3) auftrifft und zwischen dem Strom der Verbrennungsgase (7) und dem zweiten Strom (9) angeordnet ist.

## Revendications

1. Dispositif pour la fabrication de fibres de verre, comprenant:
- au moins un rotor (3) destiné à recevoir à son intérieur un matériau (4) à former en fibres et destiné à être mis en rotation autour de son axe (A), ledit rotor (3) présentant, sur l'une de ses surfaces, un nombre prédéterminé de trous (5), ces trous étant destinés à permettre la sortie du matériau (4) sous forme de filaments primaires;
- au moins un brûleur annulaire (6) produisant un écoulement de gaz brûlés à haute température vers les filaments primaires sortant du rotor (3) et maintenant lesdits filaments à un état visqueux susceptible de permettre leur formation en fibres toujours plus minces;
- une couronne de soufflage fixe (16), engendrant un écoulement d'air comprimé (15); et
- au moins une deuxième couronne de soufflage (8), de préférence du type à air comprimé, placée au-dessous du brûleur annulaire (6) pour engendrer un deuxième écoulement (9) actif en tant que moyen d'étirage pour les filaments de verre sortant du rotor (3);
**caractérisé en ce que** ladite deuxième unité soufflante (8) peut être déplacée selon plusieurs configurations de fonctionnement différentes pour varier la direction du deuxième écoulement (9) et/ou le point d'incidence entre le deuxième écoulement (9) et les fibres sortant du rotor (3).

2. Dispositif selon la revendication 1, **caractérisé en ce que** la deuxième unité soufflante (8) comprend au moins une tuyère de distribution du fluide en écoulement (10) qui est mobile autour d'un axe transversal respectif (B), de préférence perpendiculaire à l'axe de rotation (A) du rotor (3).

3. Dispositif selon la revendication 2, **caractérisé en ce que** la deuxième unité soufflante (8) comprend une pluralité de tuyères (10) disposées côte à côte le long d'un parcours circulaire (P) concentrique à l'axe de rotation (A) dudit rotor (3); ledit axe de rotation (B) de chaque tuyère (10) étant tangentiel audit parcours circulaire (P).

4. Dispositif selon la revendication précédente, **caractérisé en ce que** ledit deuxième écoulement (9) est formé des écoulements engendrés par chaque tuyère (10); ledit deuxième écoulement (9) ayant une conformation globale essentiellement conique convergeant vers le bas.

5. Dispositif selon la revendication précédente, **caractérisé en ce qu'**il comprend en outre des moyens d'entraînement pour lesdites tuyères (10) pour déplacer ces dernières d'une façon coordonnée et en synchronisme réciproque, lesdits mouvements des tuyères (10) variant l'angle de l'écoulement engendré par chaque tuyère (10) par rapport à l'axe de rotation (A).

6. Dispositif selon la revendication précédente, **caractérisé en ce qu'**il comprend en outre un organe de support sensiblement annulaire (12) pour soutenir chacune desdites tuyères (10), ledit organe de support (12) étant mobile le long d'une direction parallèle à l'axe de rotation (A) dudit rotor (3) vers et loin du brûleur annulaire (6).

7. Dispositif selon l'une quelconque des revendications précédentes, **caractérisé en ce qu'**il comprend en outre une source d'air comprimé (13) associée à ladite deuxième unité soufflante (8) pour engendrer le deuxième écoulement d'air (9) sous pression.

8. Dispositif selon l'une quelconque des revendications précédentes, **caractérisé en ce que** le brûleur annulaire (6) comprend une chambre également de forme annulaire, disposée au-dessus dudit rotor (3) et ayant une ouverture de sortie (6a) pour l'écoulement des gaz brûlés à haute température (7), essentiellement parallèle à l'axe de rotation (A) du rotor (3) et dirigé vers les filaments primaires sortant du rotor (3).

9. Dispositif selon la revendication précédente, **caractérisé en ce qu'**il comprend un dispositif soufflant (14) disposé entre l'ouverture de sortie des gaz brûlés (6a) et le dispositif soufflant (8) pour engendrer un écoulement d'air comprimé (15) dirigé vers le bas et vers l'axe de rotation (A) du rotor (3); ledit écoulement (15) étant actif sur les filaments primaires sortant du rotor (3).

10. Dispositif selon la revendication 9, **caractérisé en ce que** ledit dispositif soufflant (14) comprend une chambre annulaire (16) ayant une ouverture de sortie pour le fluide en écoulement (15); ladite ouverture de sortie étant attenante et concentrique par rapport à l'ouverture de sortie des gaz brûlés (6a) du brûleur (6).

11. Dispositif selon la revendication 9 et/ou 10, **caractérisé en ce que** le rapport entre l'angle β défini entre le premier écoulement (15) et l'axe de rotation (A) et l'angle α défini entre le deuxième écoulement (9) et l'axe de rotation (A) est plus petit que ou égal à 0,6 pour produire des fibres courtes et épaisses.

12. Dispositif selon l'une quelconque des revendications 9 à 11, **caractérisé en ce que** ledit deuxième écoulement (9) peut être soumis à mouvement jusqu'à tomber sur la fibre sortant du rotor à un point coïncidant avec le point d'incidence du premier écoulement (15).

13. Procédé pour la fabrication de fibres de verre, comprenant les étapes suivantes:
- alimenter un rotor (3) entraîné en rotation avec du verre fondu à une température correspondant à la viscosité correcte pour permettre audit verre fondu d'être réduit en fibres (4);
- obtenir la sortie du verre, sous forme de filaments primaires, d'un nombre prédéterminé de trous (5) présents dans le rotor (3);
- engendrer un écoulement des gaz brûlés à haute température (7), actif sur lesdits filaments sortant du rotor (3) pour les maintenir à un état visqueux susceptible de permettre leur réduction en fibres;
- effectuer une première opération d'amincissement à travers une unité soufflante (14) engendrant un premier écoulement d'air comprimé (15) agissant sur les filaments primaires;
- engendrer un deuxième écoulement (9) également actif sur le matériau en fibre;
**caractérisé en ce qu'**il comprend en outre l'étape de modifier la direction du deuxième écoulement (9) et/ou le point d'incidence entre le deuxième écoulement (9) et les fibres sortant du rotor (3).

14. Procédé selon la revendication précédente, **caractérisé en ce que** l'étape de modifier la direction du deuxième écoulement (9) est obtenue en entraînant en rotation une deuxième unité soufflante (8) autour d'un axe (B) de celle-ci transversal à l'axe de rotation (A) du rotor (3).

15. Procédé selon la revendication précédente, **caractérisé en ce que** ladite étape d'entraîner en rotation la deuxième unité soufflante (8) comprend la sous-étape de causer la rotation d'une pluralité de tuyères de distribution d'un fluide en écoulement (10); chaque tuyère (10) tournant autour d'un axe (B) respectif tangent à un parcours circulaire (P) coaxial à l'axe de rotation (A) du rotor.

16. Procédé selon la revendication précédente, **caractérisé en ce que** lesdites tuyères (10) sont mises en rotation d'une façon coordonnée et en synchronisme réciproque pour changer la direction du deuxième écoulement (9) définie par les écoulements engendrés par chaque tuyère individuelle (10).

17. Procédé selon l'une quelconque des revendications 13 à 16, **caractérisé en ce que** l'écoulement des gaz brûlés (7) est un écoulement de gaz à haute température dirigé vers le bas le long d'une direction de préférence parallèle à l'axe de rotation (A) du rotor (3), et **en ce que** le deuxième écoulement (9) est un écoulement d'air comprimé dirigé vers l'axe de rotation (A) du rotor (3).

18. Procédé selon l'une quelconque des revendications 14 à 17, **caractérisé en ce qu'**il comprend en outre l'étape de causer le mouvement de ladite deuxième unité soufflante (8) le long d'une direction parallèle à l'axe de rotation (A) du rotor.

19. Procédé selon l'une quelconque des revendications précédentes, **caractérisé en ce qu'**il comprend en outre l'étape d'engendrer un premier écoulement (15) par une unité soufflante (14); ledit écoulement (15) étant incident sur les fibres sortant du rotor (3) et étant disposé entre l'écoulement des gaz brûlés (7) et le deuxième écoulement (9).
